# EUROPEAN PATENT SPECIFICATION

(11) **EP 1 177 691 B1**
(45) Date of publication and mention of the grant of the patent: **26.01.2011**
(21) Application number: 01912329.8
(22) Date of filing: 13.03.2001
(51) Int. Cl.: H04N 7/26

(54) **METHOD AND APPARATUS FOR GENERATING COMPACT TRANSCODING HINTS METADATA**
VERFAHREN UND VORRICHTUNG ZUR ERZEUGUNG VON KOMPAKTEN METADATEIEN FÜR TRANSCODIERUNGSHINWEISE
METHODE ET DISPOSITIF PERMETTANT DE GENERER DES METADONNEES COMPACTES SUR DES INDICES DE TRANSCODAGE

(30) Priority: 13.03.2000 JP 2000068720; 16.05.2000 US 204729 P
(43) Date of publication of application: 06.02.2002
(73) Proprietor: Sony Corporation, Tokyo 141-0001 (JP)
(72) Inventor: KUHN, Peter, c/o SONY CORPORATION, Tokyo 141-0001 (JP)
(74) Representative: Turner, James Arthur
(86) International application number: PCT/JP2001/001982
(87) International publication number: WO 2001/069936

(56) References cited:
- WO-A-98/52356
- WO-A1-95/35628
- WO-A2-99/38314
- "PROPOSED SMPTE STANDARD FOR TELEVISION- MPEG-2 VIDEO RECODING DATA SET" SMPTE JOURNAL, SMPTE INC. SCARSDALE, N.Y, US, vol. 109, no. 2, February 2000 (2000-02), pages 146-150, XP000913023 ISSN: 0036-1682 cited in the application
- GUNSEL B ET AL: "Content-based access to video objects: Temporal Segmentation, visual summarization, and feature extraction" SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, vol. 66, no. 2, 30 April 1998 (1998-04-30), pages 261-280, XP004129645 ISSN: 0165-1684
- CHUN K W ET AL: "An adaptive perceptual quantization algorithm for video coding" IEEE 1993 INTERNATIONAL CONFERENCE ON CONSUMER ELECTRONICS. ICCE, ROSEMONT, IL, USA, 8-10 JUNE 1993, vol. 39, no. 3, pages 555-558, XP002180113 IEEE Transactions on Consumer Electronics, Aug. 1993, USA ISSN: 0098-3063 cited in the application
- WEE S J ET AL: "FIELD-TO-FRAME TRANSCODING WITH SPATIAL AND TEMPORAL DOWNSAMPLING" PROCEEDINGS 1999 INTERNATIONAL CONFERENCE ON IMAGE PROCESSING. ICIP'99. KOBE, JAPAN, OCT. 24 - 28, 1999, INTERNATIONAL CONFERENCE ON IMAGE PROCESSING, LOS ALAMITOS, CA: IEEE, US, vol. 4 OF 4, 24 October 1999 (1999-10-24), pages 271-275, XP000895525 ISBN: 0-7803-5468-0
- ISO/IEC AD HOC GROUP ON MPEG-4 VIDEO VM EDITING: "MPEG-4 Video Verification Model Version 13.0 ISO/IEC JTC1/SC29/WG11 MPEG97/N2687" INTERNATIONAL ORGANIZATION FOR STANDARDIZATION - ORGANISATION INTERNATIONALE DE NORMALISATION, March 1999 (1999-03), pages 1-347, XP002177336
- BHARADVAJ H; JOSHI A; AUEPHANWIRIYAKUL S: "An active transcoding proxy to support mobile web access" PROCEEDINGS OF THE 17TH IEEE SYMPOSIUM ON RELIABLE DISTRIBUTED SYSTEMS, WEST LAFAYETTE, IN, USA, 20-23 OCT. 1998, October 1998 (1998-10), pages 118-123, XP010319076 IEEE Comput. Soc., Los Alamitos, CA, USA ISBN: 0-8186-9218-9

## Description

### Technical Field

The present invention relates to an audio/video (or audiovisual, "A/V") signal processing method and an A/V signal processing apparatus for extracting a compact representation of a multimedia description and transcoding hints metadata for transcoding between different (e.g., MPEG) compressed content representations, manipulating (e.g., MPEG compressed) bitstream parameters such as frame rate, bit rate, session size, quantization parameters, and picture coding type structure, such as group of pictures, or "GOP", classifying A/V content, and retrieving multimedia information.

### Background Art

A/V content is increasingly being transmitted over optical, wireless, and wired networks. Since these networks are characterized by different network bandwidth constraints, there is a need to represent A/V content by different bit rates resulting in varying subjective visual quality. Additional requirements on the compressed representation of A/V content are imposed by the screen size, computational capabilities, and memory constraints of an A/V terminal.

Therefore, A/V content stored in a compressed format, e.g., as defined by Moving Pictures Experts Group ("MPEG"), must be converted to, e.g., different bit rates, frame rates, screen sizes, and in accordance with varying decoding complexities and memory constraints of different A/V terminals.

To avoid the need for storing multiple compressed representations of the same A/V content for different network bandwidths and different A/V terminals, A/V content stored in a compressed MPEG format may be transcoded to a different MPEG format.

With respect to video transcoding, reference is made to the following:
W009838800A1: O. H. Werner, N. D. Wells, M. J. Knee: Digital Compression Encoding with improved quantization, 1999, proposes an adaptive quantization scheme;
US5870146: Zhu; Qin-Fan: Device and method for digital video transcoding, 1999;
W009929113A1: Nilsson, Michael, Erling; Ghanbari, Mohammed: Transcoding, 1999;
US5805224: Keesman; Gerrit J, Van Otterloo; Petrus J.: Method and Device for Transcoding Video Signal, 1998;
WO09943162ALGolin, Stuart, Jay: Motion vector extrapolation for transcoding video sequences, 1999;
US5838664: Polomski; Mark D.: Video teleconferencing system with digital transcoding, 1998;
W009957673A2: Balliol, Nicolas: Transcoding of a data stream, 1999;
US5808570: Bakhmutsky; Michael: Device and Method for pair-matching Huffman-Transcoding and high performance variable length decoder with two-word bitstream segmentation which utilizes the same, 1998;
W009905870A2: Lemaguet, Yann: Method of Switching between Video Sequences and corresponding Device, 1999; and

W009923560A1: LUDWIG, Lester; BROWN, William; YUL, Inn, J.; VUONG, Anh, T., VANDERLIPPE, Richard; BURNETT, Gerald; LAUWERS, Chris; LUI, Richard; APPLEBAUM, Daniel: Scalable networked multimedia system and application, 1999.

However, none of these patents on video transcoding disclose or suggest using transcoding hints metadata information to facilitate A/V transcoding.

The Society of Motion Picture and Television ("SMPTE") proposed a standard for Television on MPEG-2 Video Recoding Data Set (327M-2000), which provides for re-encoding metadata using 256 bits for every macroblock of the source format. However, this extraction and representation of transcoding hints metadata has several disadvantages. For example, according to the proposed standard, transcoding hints metadata (such as GOP structure, quantizer settings, motion vectors, etc.) is extracted for every single frame and macroblock of the A/V source content. This method offers the advantage of offering detailed and content adaptive transcoding hints and facilitates transcoding while widely preserving the subjective A/V duality. However, the size of the transcoding hints metadata is very large. In one specific implementation of the proposed standard, 256 bits of transcoding hints metadata are stored per macroblock of MPEG video. This large amount of transcoding hints metadata is not feasible for, say, broadcast standard on transcoding hints metadata is limited to broadcast studio applications.

Another technique for transcoding hints metadata extraction and representation includes collecting general transcoding hints metadata for the transcoding of compressed A/V source content with a specific bit rate to another compressed format and bit rate. However, this technique is disadvantageous in not taking the characteristic properties of the transcoded content into account. For example, in the source content, the A/V characteristics may change from an A/V segment with limited amount of motion and few details (e.g., a news anchor scene) to another A/V segment depicting fast motion and numerous details (e.g., a sports even scene). According to this technique, misleading transcoding hints metadata, which would not suitably represent the different characteristics of both video segments, would be selected and, therefore, results in poor A/V quality and faulty bit rate allocation.

WO 95/35628 (Snell & Wilcox) discloses a video compression system in which an MPEG-2 or other compressed video stream (CP) can be manipulated as separate information bus (IB) and coefficient (CP*) streams. The information bus stream (IB) contains motion vector information but also information derived from a previous decoding operation (14, 18) for use in a subsequent coding operation (22). Processing in the coefficient domain enables bit rate conversion without deciding to the pixel level and also simplifies the combination of MPEG layers.

WO 99/38314 (Sarnoff Corporation) discloses a method and apparatus for preprocessing an image sequence to extract side information concerning the image sequence is disclosed. In one embodiment, the side information is inserted into the image sequence, such that upon being encoded at a later time, the encoder can utilise the side information to best select one or more coding parameters. Alternatively, the side information can be stored on a storage device and is then made available to an encoder that is tasked with encoding the image sequence.

The present invention seeks to convert a content signal to a format suitable for a target to use the content signal.

According to one aspect of the present invention, there is provided a method of processing content signals representing content to convert the content signals to a format suitable for a target to use the content signals , according to claim 1.

According to another aspect of the present invention, there is provided signal processing apparatus for converting content signals representing content to a format suitable for a target to use the content signals, according to claim 10.

An embodiment of the present invention described herein seeks to provide a method and apparatus for extracting a compact and A/V-content adaptive multimedia description and transcoding hints metadata representation.

An embodiment of the invention described herein seeks to provide a transcoding method and apparatus that allow for real-time execution without significant delay and inhibitive computational complexity one of the requirements for a transcoding method. A second requirement for a transcoding method is to preserve the subjective A/V quality as much as possible. To facilitate a transcoding method that fulfils both of these requirements for various compressed target formats, transcoding hints metadata may be generated in advance and stored separately or together with the compressed A/V content. An embodiment of this invention seeks to provide a highly compact representation to reduce storage size and to facilitate distribution (e.g., broadcast to local A/V content server) of multimedia description and transcoding hints metadata.

An embodiment of the invention described herein seeks to provide a transcoding system that: 1) preserves the A/V quality through the transcoding process, and 2) limits the computational complexity in order to enable real-time applications with minimal delay. In accordance with an embodiment of the invention, additional data (metadata) covering transcoding hints may be associated to the compressed A/V content.

A better understanding of the invention will in part be obvious and will in part be apparent from the specification and the drawings.

An apparatus and method according to an embodiment of the invention provides automatic transcoding hints metadata extraction and compact representation.

Embodiments of the present invention are in the field of transcoding compressed AN content from one compressed format into A/V content of another format by using supporting transcoding metadata. The term transcoding includes, but is not limited to changing the compressed format (e.g. conversion from MPEG-2 format to MPEG-4 format), frame-rate conversion bit rate-conversion, session-size conversion, screen-size conversion, picture coding type conversions, etc.

An embodiment of the present invention may also be applied to automatic video classification using the aforementioned transcoding hints states as classes of different scene activity in video.

The invention accordingly comprises the several steps and the relation of one or more of such steps with respect to each of the others, and the apparatus embodying features of construction, combination(s) of elements and arrangement of parts that are adapted to effect such steps, all as exemplified in the following detailed disclosure, and the scope of the invention will be indicated in the claims.

### Brief Description of the Drawings

For a more complete understanding of the invention, reference is made the following description and accompanying drawing(s), in which:
Fig. 1 depicts a system overview of a transcoding system in a home network with various A/V terminals in accordance with an embodiment of the invention;
Fig. 2 illustrates the transcoding hints extraction (Group of Pictures, "GOP") in accordance with an embodiment of the invention;
Fig. 3 illustrates an example for the selection of transcoding states depending on the number of new feature points per frame according to an embodiment of the invention;
Fig. 4 shows an example of a transcoding hints state diagram with 3 states according to an embodiment of the invention;
Fig. 5 illustrates the transcoding hints metadata extraction from compressed and uncompressed source content in accordance with an embodiment of the invention;
Fig. 6 shows a video segmentation and transcoding hints state selection process in accordance with an embodiment of the invention;
Fig. 7 shows a method of determining the boundaries of a new video segment (or new GOP) in accordance with an embodiment of the invention;
Fig. 8 shows an algorithm on how to select the transcoding hints state in accordance with an embodiment of the invention;
Fig. 9 provides an overview of a structural organization of transcoding hints metadata in accordance with an embodiment of the invention;
Fig. 10 depicts a structural organization of a general transcoding hints metadata description scheme according to an embodiment of the invention;
Fig. 11 depicts the transcoding hints metadata for source format definition according to an embodiment of the invention;
Fig. 12 depicts the transcoding hints metadata for target format definition according to an embodiment of the invention;
Fig.13 depicts the general transcoding hints metadata representation according to an embodiment of the invention;
Fig. 14 depicts the segment-based transcoding hints metadata representation according to an embodiment of the invention;
Fig. 15 depicts the encoding complexity transcoding hints metadata according to an embodiment of the invention; and
Fig. 16 depicts the transcoding hints state metadata according to an embodiment of the invention.

### Best Mode for Carrying out the Invention

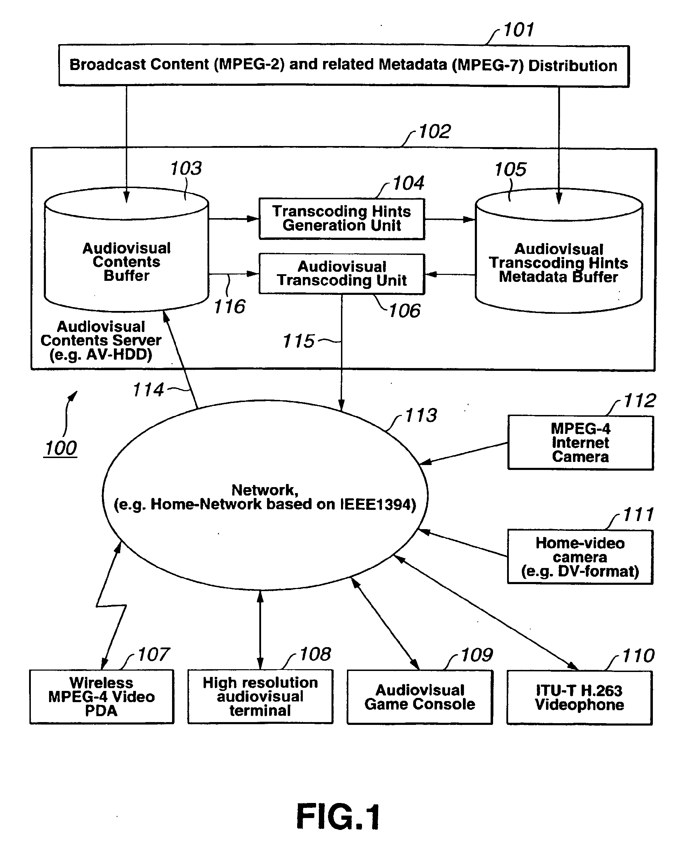

Fig. 1 depicts a general overview on a system 100 for transcoding in a home network environment in accordance with an embodiment of the invention. As shown in Fig. 1, an A/V content server 102 includes an A/V content storage 103, an A/V transcoding unit 106, a transcoding hints metadata extraction unit 104, and an A/V transcoding hints metadata storage buffer 105. A/V content storage 103 stores compressed A/V material from various sources with varying bit rate and varying subjective quality. For example, A/V content storage 103 may contain home video from a portable Digital Video ("DV") video camera 111, MPEG-4 compressed video with a very low bit rates (of say 10 kbit/s) from an MPEG-4 Internet camera 112, and MPEG-2 Main Profile at Main Level ("MP@ML") compressed broadcast video of around 5 Mbit/s from a broadcast service 101, which is in some cases already associated with transcoding hints metadata. A/V content server 102 may also contain high definition compressed MPEG video at considerably higher bit rates.

As shown in Fig. 1, A/V content server 102 is connected to a network 113, which may be a wire-based or wireless home network. Several A/V terminals with different characteristics may also be attached to network 113, including, but not limited to: a wireless MPEG-4 A/V personal digital assistant ("PDA") 107, a high resolution A/V terminal for high definition television entertainment 108, an A/V game console 109, and an International Telecommunications Union Technical Standards Group ("ITU-T") based videophone 110. The A/V terminals 107, 108, 109, and 110 may be attached with different bit rate transmission capabilities (due to cable or radio link) to home network 113.

Furthermore, wireless video PDA 107, for example, may be limited in terms of computational power, storage memory, screen size, video frame rate, and network bit rate. Therefore, A/V transcoding unit 106 may transcode, for example, 5 Mbit/s MPEG-2 broadcast video at European 25 frames per second ("fps") and 720x 480 pel contained in A/V content server 102 to an MPEG-4 500 kbit/s 15 fps video for wireless transmission and display on a 352x240 pel display by wireless MPEG-4 video PDA 107. A/V transcoding unit 106 may use the transcoding hints metadata from buffer 105 to transcode, in real time, the compressed source bit rate of the A/V content to the capabilities of each specific target A/V terminal 107, 108, 109, and 110. The transcoding hints metadata are generated in transcoding hints metadata extraction unit 104 or they may be distributed by a broadcast service 101.

As shown in Fig.1, a compressed bitstream in a source format (hereinafter "first bitstream") 116 is transferred from A/V content buffer 103 to A/V transcoding unit 106. A bitstream in a target format (hereinafter "second bitstream") 115 is transferred after transcoding in transcoding unit 106 to home network 113. From home network 113, content in, e.g., compressed DV format is stored in A/V content storage 103 via link 114.

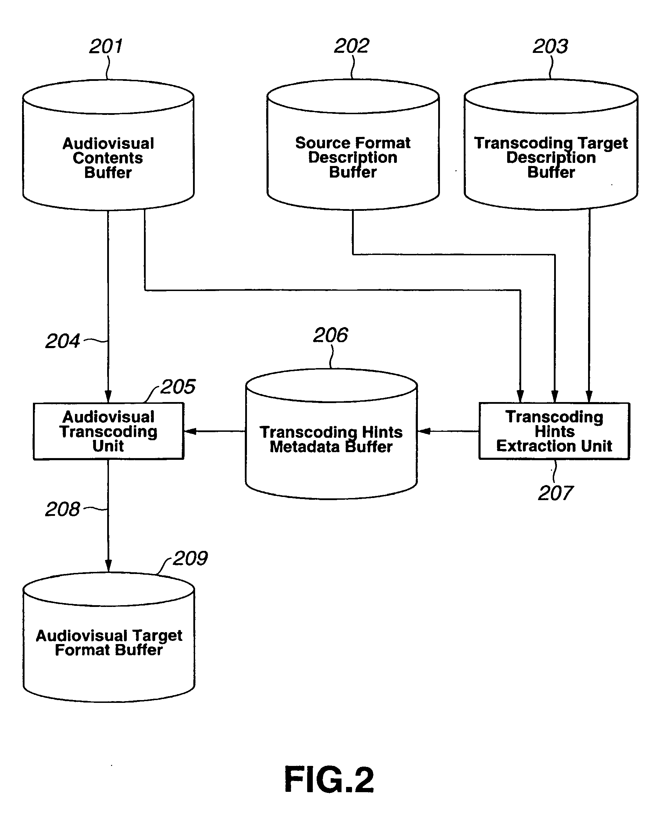

Fig. 2 illustrates the transcoding hints extraction, transcoding hints storage, and transcoding process in accordance with an embodiment of the invention. As shown in Fig. 2, a buffer 201 contains A/V content in a source format. A buffer 202 contains a description of the source format, such as bit rate, compression method, GOP structure, screen size, interlaced or progressive format, etc. A buffer 203 contains a description of a target format, such as bit rate, compression method, GOP structure, screen size, interlaced or progressive format, etc. A transcoding hints extraction unit 207 reads the A/V content in compressed source format from A/V buffer 201, as well as the source format description from buffer 202 and the transcoding target format description from buffer 203. After the transcoding hints are calculated by transcoding hints extraction unit 207, the transcoding hints are stored in a transcoding hints metadata buffer 206. An A/V transcoding unit 205 reads first bitstream 204 in the source format from A/V content buffer 201 and transforms the source format into the target format by means of the transcoding hints metadata stored in buffer 206. A/V transcoding unit 205 outputs second bitstream 208 in the new compressed target format to an A/V target format buffer 209 for storage.

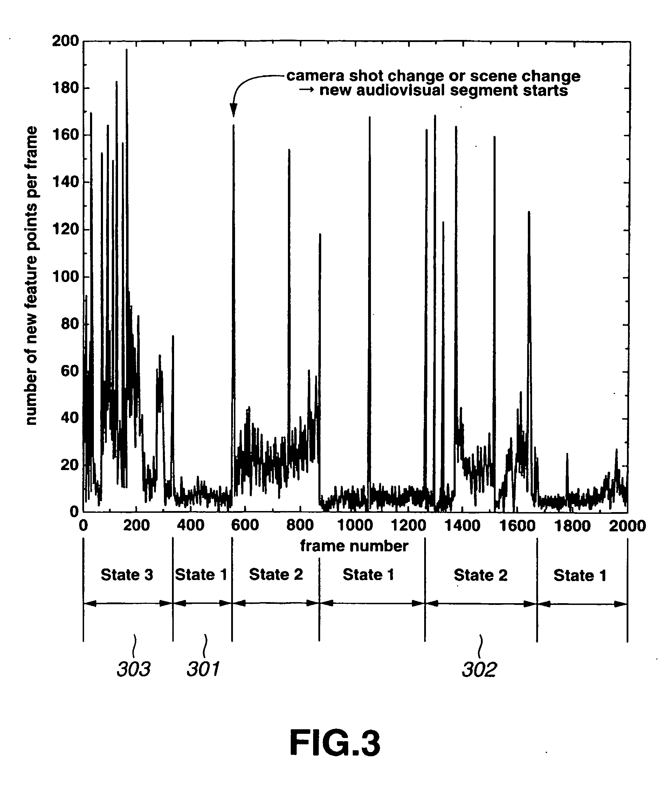

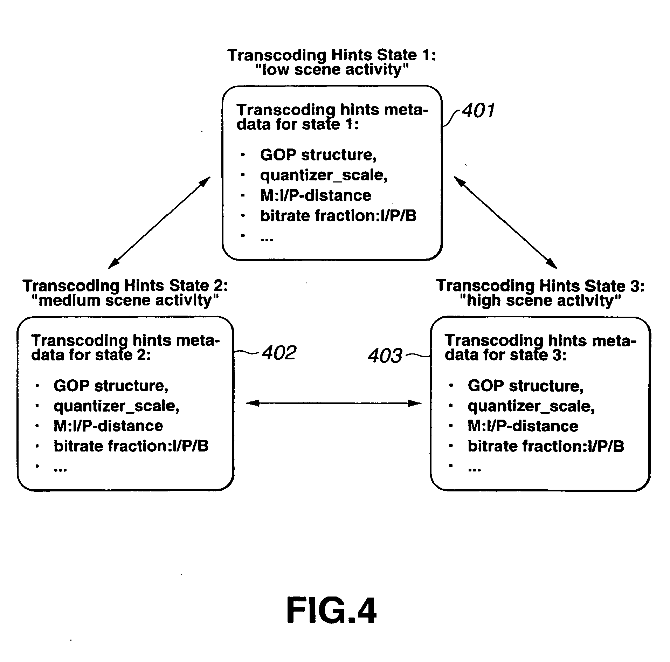

Figs. 3 and 4 illustrate the principle of transcoding hints metadata organization in accordance with an embodiment of the invention. MPEG-based video compression uses a predictable method, where changes between successive frames are encoded. Video content with a large number of changes from one frame to the next frame requires (for maintaining the subjective quality while limiting the bit rate) different re-encoding parameter settings, than video content with small changes between frames. Therefore, it is important to decide in advance on the re-encoding parameters. The transcoding hints metadata selection mainly depends on amount and characteristics of unpredictable visual content. The new visual content may not be predicted from previous frames and may be bit rate intensive encoded using DCT-coefficients. As such, the inventive method uses the number of new feature points, which are not tracked from a previous frame to a current frame to determine the amount of new content per frame.

Fig. 3 depicts a graph of the number of new feature points per frame depending on the frame number of a video (horizontal axis, time axis). Section 301 is a part of a video segment where only a very small amount of new content appears between succeeding frames, and therefore respective transcoding hints metadata (e.g., large GOP size, low frame rate, low bit rate, ...) may be chosen. Section 302 includes a slightly higher number of new feature points per frame, which means that a state describing transcoding hints metadata is chosen, which provides optimum transcoding parameters for this situation (e.g., slightly smaller GOP size, higher bit rate). Section 303 depicts a transcoding metadata hints state with a high number of new feature points per frame, and therefore a high amount of new content per scene. As such, a smaller M value (I/P-frame distance) and a higher bit rate are chosen.

Fig. 4 depicts an example of the basic organization of a transcoding hints metadata state diagram consisting of three discrete transcoding hints metadata states. Every discrete transcoding state may contain metadata for GOP structure, quantizer parameters, bit rate, screen size, etc. These transcoding hint parameters may have a fixed value or may be a function of another parameter. For example, the GOP length may be a discrete function of the number of new feature points per frame and the quantizer parameters may be a function of the edge and texture activity derived from the DCT coefficients. Each of the three transcoding hints metadata states in this example may be selected to accommodate three different encoding situations. As shown in Fig. 4, state "3" 403 is selected for a high amount of motion and low amount of new content per frame and represents the optimum state for transcoding hints metadata for such content. State "2" 402 is selected for low amount of motion and high amount of content with high edge activity, which may require a high number of bits to be spent. State "1" 401 is, for example, selected to accommodate the transcoding process for A/V content with low scene activity. There are also other special transcoding hint metadata states provided for video editing effects, like different crossfading effects, abrupt scene changes, or black pictures between two scenes. The location of the video editing effects may be detected manually, semi-automatically, or fully automatically.

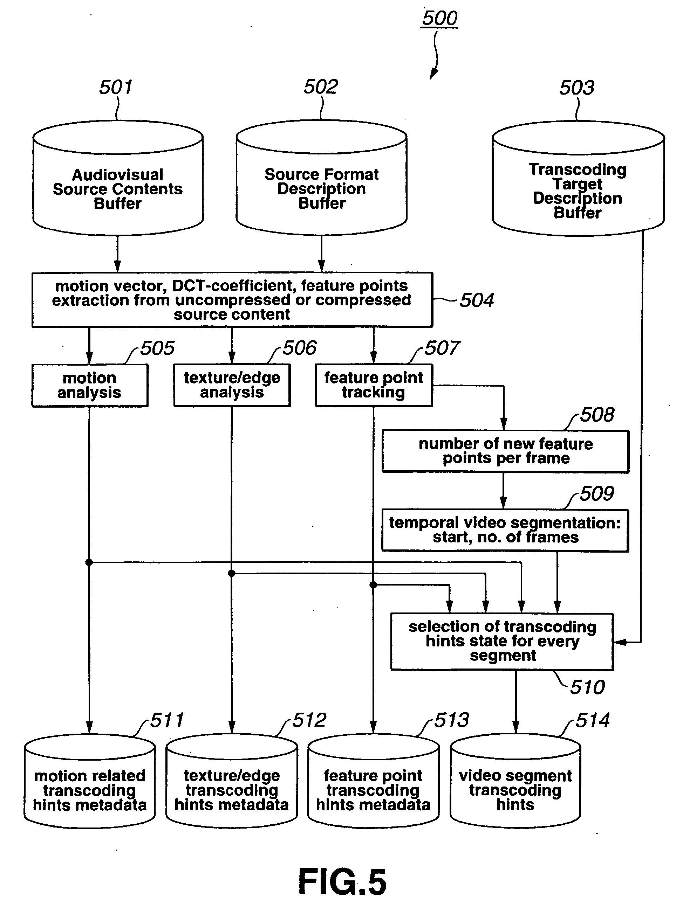

Fig. 5 illustrates the transcoding hints metadata extraction from compressed and uncompressed source content in accordance with an embodiment of the invention. As shown in Fig. 5, a system 500 includes an A/V source content buffer 501, a source format description buffer 502, and a target format description buffer 503.

A memory 504 is included for storing the motion vector, DCT-coefficient, and feature point extraction from compressed or uncompressed domains. In the compressed domain, motion vector from P- and B-macroblocks may be directly extracted from a bitstream. However, there are no motion vectors, for Intra-macroblocks. Therefore, the motion vectors obtained for B- and P- macroblocks may be interpolated for I-macroblocks (see Roy Wang, Thomas Huang: "Fast Camera motion Analysis in MPEG domain", IEEE International Conference on Image Processing, ICIP 99, Kobe, Japan, Oct 1999). DCT coefficients for blocks of Intra-macroblocks may be directly extracted from a bitstream. For P- and B-macroblocks, a limited number of DCT-coefficients (DC and 2 AC coefficients) may be obtained by the method described by Shih-Fu Chang, David G. Messerschmid: "Manipulation and Composition of MC-DCT compressed video", IEEE Journal on Selected Areas in Communications, vol. 8, 1996. Exemplary methods of compressed domain feature point extraction and motion estimation is disclosed in the International patent application by Peter Kuhn published as WO01/41451 , which is incorporated herein by reference. In some cases, the A/V source content may only be available in uncompressed format or in a compression format that is not based on the DCT and motion compensation principle, which is employed by MPEG-1, MPEG-2, MPEG-4, ITU-T H.261, and ITU-T H.263. For the DV format, it may be the case that only the DCT-coefficients are available. In these cases motion vectors may be obtained by motion estimation methods, cf. e.g. Peter Kuhn. "Algorithms, Complexity Analysis and VLSI Architectures for MPEG-4 Motion Estimation", Kluwer Academic Publishers, 1999. DCT-coefficients may be obtained by performing a block-based DCT-transform, cf. K.R. Rao, P. Yip: "Discrete Cosine Transform - Algorithms, Advantages, Applications", Academic Press 1990. Feature points in pel domain (uncompressed domain) may be obtained for example by the method described by Bruce D. Lucas, Takeo Kanade: "An iterative registration technique with an application to stereo vision", International Joint Conference on Artificial Intelligence, pp. 674-679, 1981.

A motion analysis part 505 extracts the parameters of a parametric motion model from the motion vector representation in memory 504. Parametric motion models may have 6 and 8 parameters and parametric motion estimation may be obtained by methods described in M. Tekalp: "Digital Video Processing", Prentice Hall, 1995. The goal of using a motion representation is to eliminate the motion estimation in the transcoder for delay and speed reasons. Therefore, the input representation of motion from the source bitstream may be used to derive the output representation (target bitstream). For example, screen-size resizing, interlaced-progressive conversion, etc., may rely heavily on the motion representation. The parameters of the motion representation may also be used for coding decisions on GOP structure. A texture/edge analysis part 506 may be based on the DCT-coefficients extracted from the bitstream, e.g., K.R. Rao, P Yip: "Discrete Cosine Transform - Algorithms, Advantages, Applications", Academic Press 1990, or K.W. Chun, K.W. Lim, H. D. Cho, J.B. Ra: "An adaptive perceptual quantization algorithm for video encoding, IEEE Transactions on Consumer Electronics, Vol. 39, No. 3, August 1993.

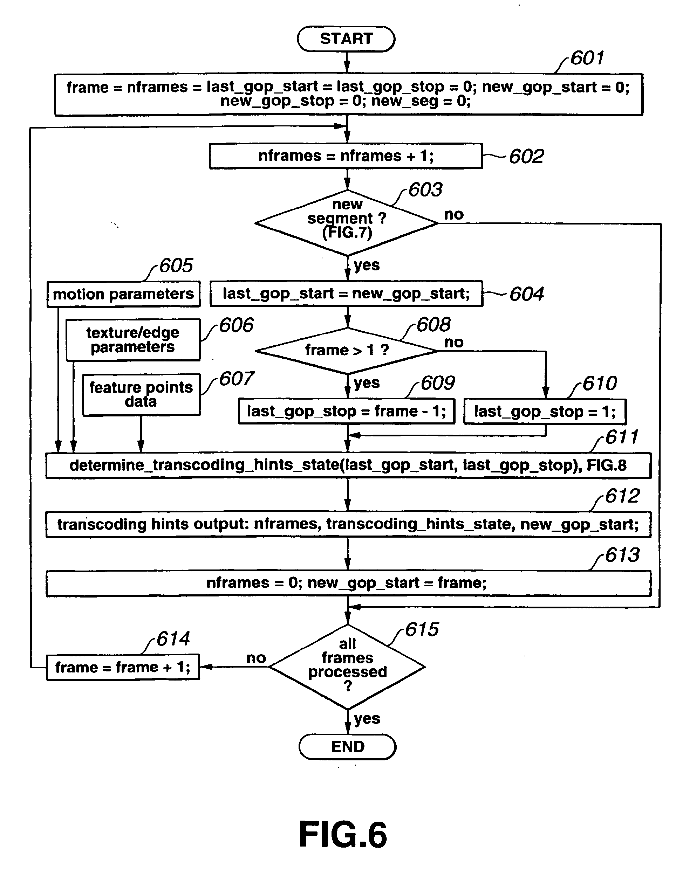

A feature point tracking part 507 for the compressed domain may employ a technique described in Peter Kuhn, International patent application with publication number WO 01/41451 which is incorporated herein by reference. A processor 510 calculates the number of new feature points per frame. A processor 509 calculates the temporal video segmentation, and a processor 510 calculates the transcoding hints state for every segment. Methods for these calculations according to an embodiment of the invention will be described in detail below with reference to Fig. 6, Fig. 7, and Fig. 8.

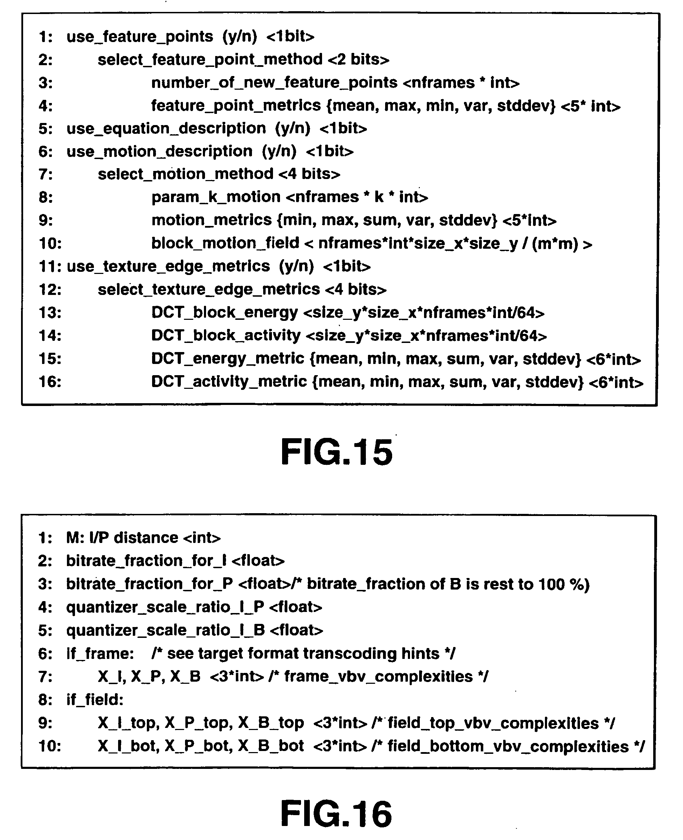

A memory 511 contains the motion-related transcoding hints metadata. A memory 512 contains the texture/edge related transcoding hints metadata, and a memory 513 contains the feature point transcoding hints metadata, all of which will be described in detail below with reference to Fig. 15. A memory 514 contains video segment transcoding hints selection metadata, which will be described with reference to Fig. 16. The automatic extraction, compact representation, and usage of the transcoding hints metadata will now be described.

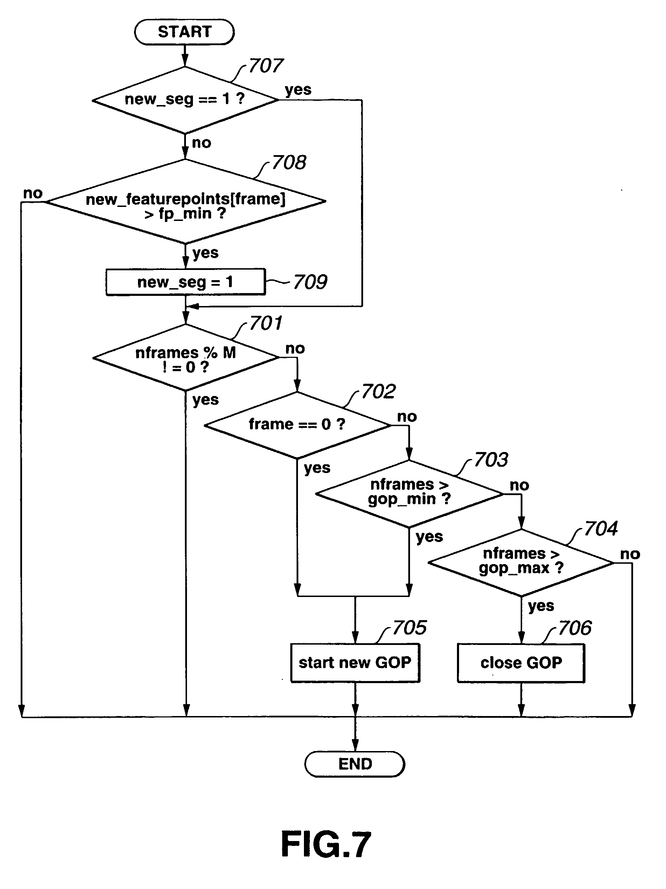

Fig. 6 discloses a video segmentation and transcoding hints state selection process in accordance with an embodiment of the invention. At step 601, some variables are initialized. The variable "frame" is the current frame number of the source bitstream, and "nframes" is the number of frames within the new video segment (or GOP, group of pictures). The other variables are only of use within this routine. At step 602, the number of frames within the GOP is incremented. At step 603, it is determined whether a new segment/GOP starts within the frame, details of which will be discussed in detail with reference to Fig. 7. If so ("yes"), control is passed to step 604, otherwise, it is passed to step 615. At step 604, the variable "last_gop_start" is initialized with the value of "new_gop_start". At steps 608 and 609, the variable "last_gop_stop" is set to "frame-1" if the variable "frame" is larger than 1. Otherwise, at step 610, "last_gop_stop" is set to 1. Next, at step 611, which is depicted in detail in Fig, 8, determines the transcoding hints state based on motion parameters 605, texture/edge parameters 606, and feature-point data 607. At step 612, the transcoding hints metadata are output to the transcoding hints metadata buffers. In accordance with an embodiment of the invention, the transcoding hints metadata comprises "nframes" (number of frames within the GOP), the transcoding hints state with all the parameters, and the start frame number of the new GOP ("new_gop_start"). After that, the variable "nframes" is set to 0 and the current frame number "frame" is given to the variable "new_gop_start". Then, at step 615, it is tested to determine if all frames of the source bitstream have been processed. If not ("no"), control is passed to step 614 where the frame number is incremented and the process is repeated starting from step 602. Otherwise, the process is terminated.

Fig. 7 illustrates a method for determining the start frame and the end frame of a new video segment or GOP according to an embodiment of the invention. At step 701, it is determined whether the variable "nframes" from Fig. 6 is an integer multiple of M (which is the I/P frame distance). If so, then "no" is selected and at step 702, it is determined whether the current frame number is the first frame. If so ("no"), control is passed to step 703 where it is determined whether "nframes" is greater than a minimum number of frames "gop_min" within a GOP. In case the result at step 702 is "yes", a new GOP is started at step 705. In case the result at step 703 is "yes", a new GOP is started at step 705. In case the result at step 703 is "no", control is passed to step 704 where it is determined whether "nframes" is greater than a maximum number of frames "gop_max" within a GOP. In case the result at step 704 is "yes", the GOP is closed at step 706, otherwise, the process is terminated.

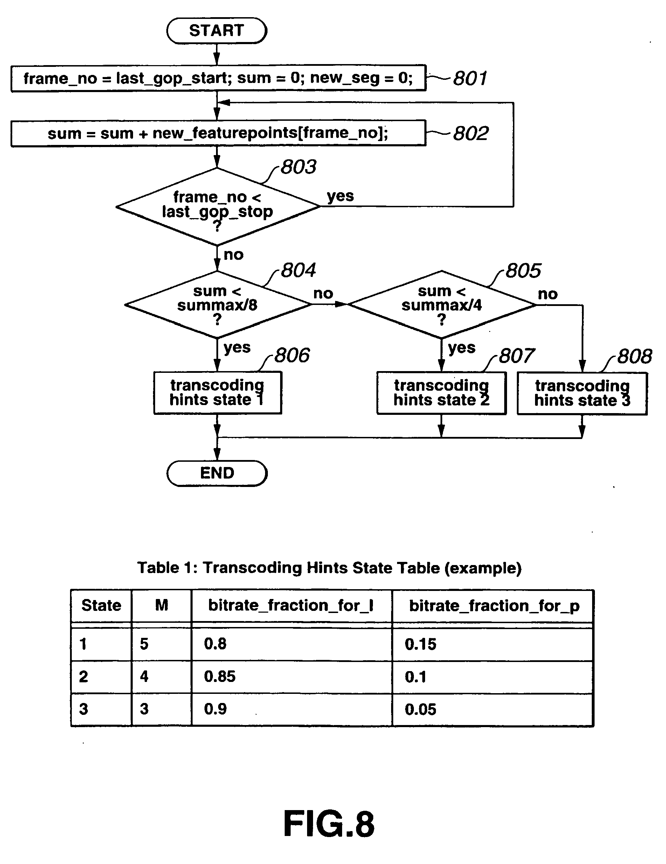

Fig. 8 illustrates a process for selecting a transcoding hint state for a specific GOP or A/V segment taking only the number of new feature points per frame into account in accordance with an embodiment of the invention. Based on the basic idea illustrated, similar decision structures may be implemented using the aforementioned motion parameters from a parametric motion estimation as well as texture/edge parameters gained from DCT-coefficients. It is noted that the class or algorithms described may also be used to classify A/V material in terms of motion, edge activity, new content per frame, etc., leading to a higher level of A/V classification. In such cases, the transcoding hint states would represent specific classes of different content material. Referring now to Fig. 8, at step 801, variables "frame_no", "last_gop_start", "sum" and "new_seg" are initialized. The variable "frame no" is given the contents of the "last_gop_start" parameter, and the variables "sum" and "new_seg" are initialized with zero. Then, at step 802, the contents of the variable "sum" is incremented by the number of new feature points of the current frame ("frame_no"). At step 803, it is determined whether the variable "frame_no" is less than the variable "last_gop_stop". If so ("yes"), step 802 is repeated, otherwise, control is passed to step 804. At step 804, it is determined whether the value of the variable "sum" is less than one-eight of a predetermined parameter "summax". The parameter "summax" is a constant that represents the maximum number of feature points that can be tracked from frame to frame multiplied by the number of frames between the frames "last_gop_start" and "last_gop_stop". It may have the value 200 according to an embodiment of the invention. If the result at step 804 is "yes", the transcoding hints state 1 is selected at step 806 for which the parameters are shown in Table 1 of Fig. 8. Otherwise, at step

805, it is determined whether the value of the variable "sum" is less than one-quarter of the predetermined parameter "summax". If so ("yes"), the transcoding hints state 2, as shown in Table 1 is selected at step 807. If not ("no"), the transcoding hints state 3 (as shown in Table 1) is selected at step 808 and the process is terminated. It is noted that the decision thresholds in steps 804 and 805 depend on the definition and number of transcoding hints states.

### Transcoding Hints Metadata Description

For metadata explanation, a pseudo C-code style may be used. Abbreviations D for Description and DS for Description Schemes, as defined in the emerging MPEG-7 metadata standard, may be used.

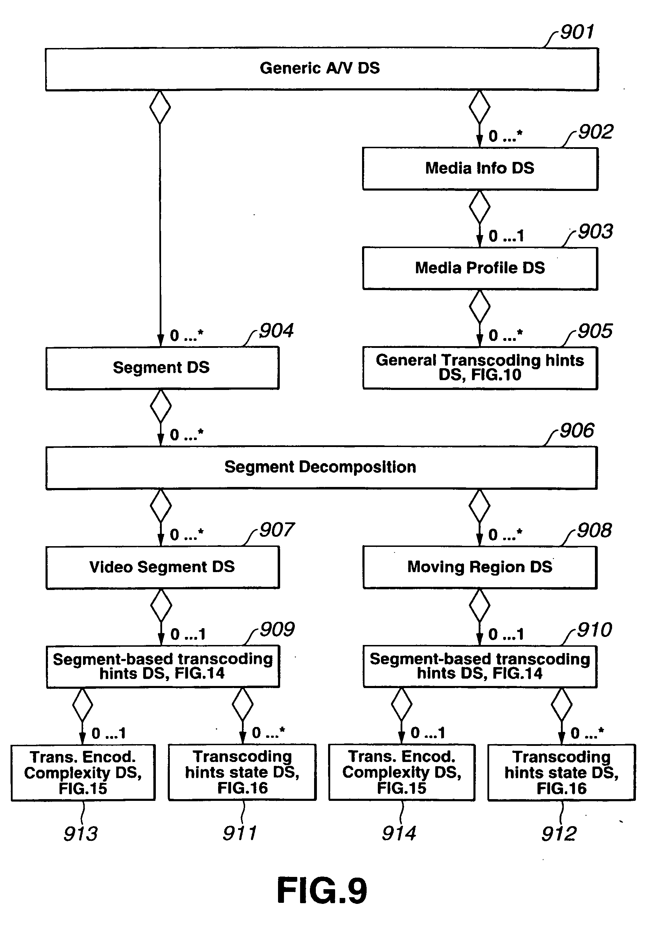

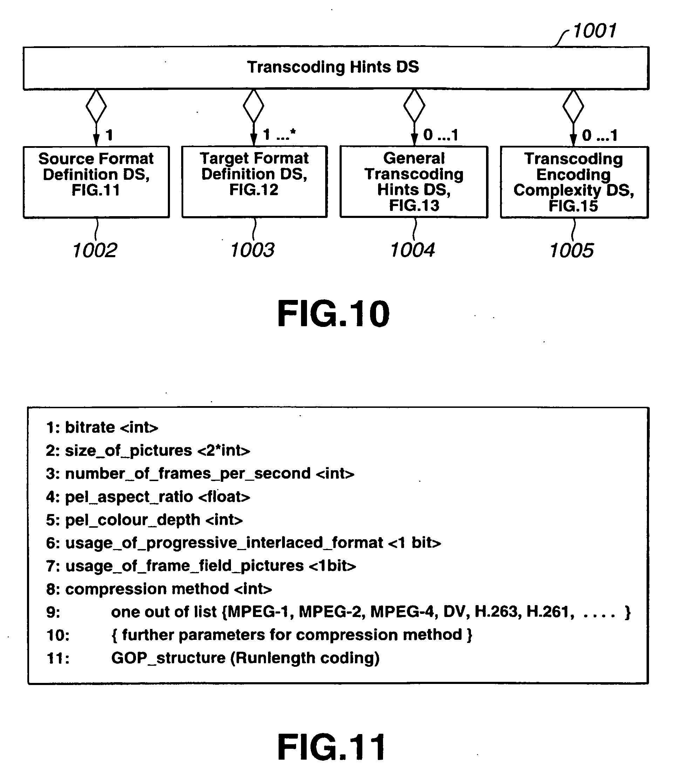

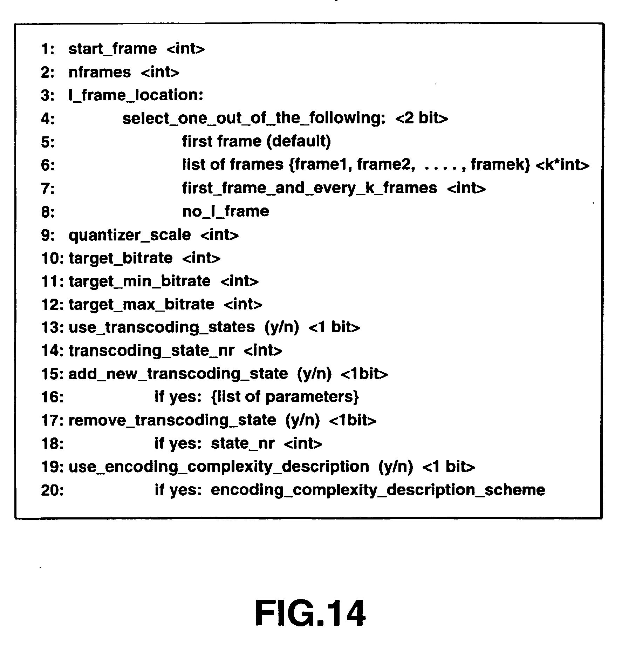

Fig. 9 depicts a structural organization of transcoding hints metadata within a Generic A/V DS 901 in accordance with an embodiment of the invention. As shown in Fig. 9, Segment DS 904 and Media Info DS 902 are derived from Generic A/V DS 901. Segment Decomposition 906 is derived from Segment DS 904, and Video Segment DS 907 and Moving Region DS 907 are derived from Segment Decomposition 906. Segment-based transcoding hints DS 909, which will be described in detail with reference to Fig. 14, is derived from Video Segment DS 907. Video Segment DS 907 accesses one or several transcoding hint state DS 911, which will be described in detail with reference to Fig. 16. From Moving Region DS 908, the Segment-based transcoding hints DS 910, which will be described in detail with reference to Fig. 14, for moving regions is derived, which accesses one or several transcoding hint state DS 912, which will be described in detail with reference to Fig. 16. From Media Info DS 902, Media Profile DS 903 is derived. From Media Profile DS 903, General Transcoding Hints DS 905, which will be described with reference to Figure 10, is derived.

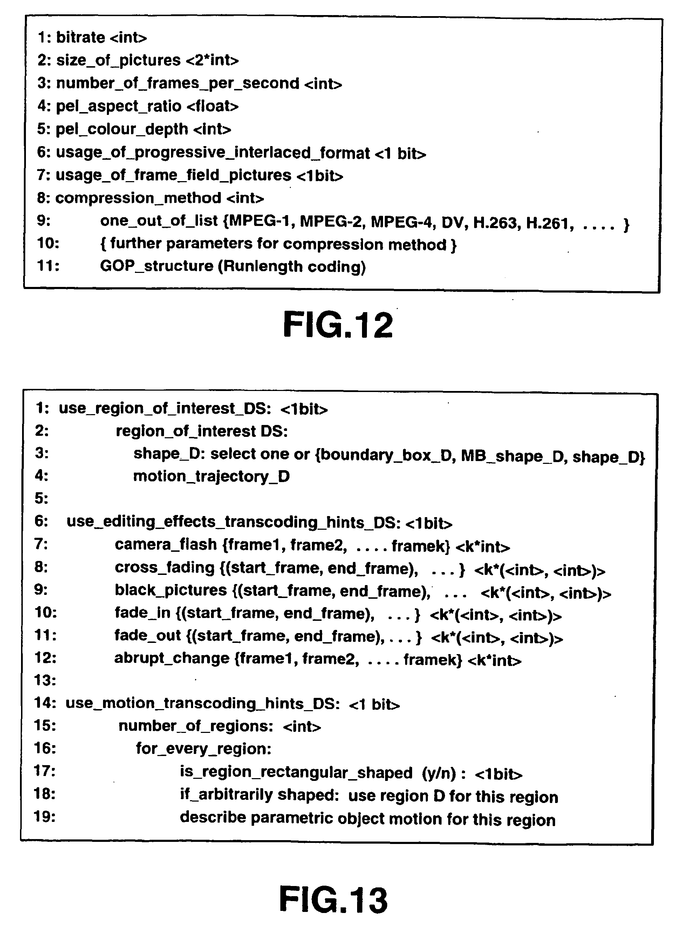

Fig.10 depicts the structural organization of Transcoding Hints DS 1001, which consists of one instance of the Source Format Definition DS 1002, which will be described with reference to Fig.11, one or several instances of target format definition DS 1003 which will be described with reference to Fig. 12. Additionally, Transcoding Hints DS 1001 consists of one optional instance of General Transcoding Hints DS 1004, which will be described with reference to Fig. 13, and one optional Transcoding Encoding Complexity DS 1005, which will be described with reference to Fig. 15.

Fig.11 depicts source format definition transcoding hints metadata (e.g., Source Format Definition DS 1002 in Fig. 10) which is associated to the whole A/V content or to a specific A/V segment, in accordance with an embodiment of the invention. As shown in Fig. 11, relevant Descriptors and Description Schemes may include:
- **bitrate** is of type <int> and describes the bit rate per second of the source A/V data stream.
- **size_of_pictures** is of type <2*int> and describes the size of picture of the source A/V format in x and y directions.
- **number_of_frames_per_second** is of type <int> and describes the number of frames per second of the source content.
- **pel_aspect_ratio** is of type <float> and describes the pel aspect ratio.
- **pel_colour_depth** is of type <int> and describes the color depth.
- **usage_of_progressive_interlaced_format** is of size < 1 bit> and describes whether the source format is in progressive or in interlaced format.
- **usage_of_frame_field_pictures** is of size <1 bit> and describes whether frame or field pictures are used.
- compression method is of type <int> and defines the compression method used for the source format and may be selected from a list that includes: MPEG-1, MPEG-2, MPEG-4, DV, H.263, H,261, etc. For every compression method, further parameters may be defined here.
- **GOP_structure** is a run-length-encoded data field of the I,P,B-states.

For example, in case there are only 1-frames in an MPEG-2 video, direct conversion to the DV format in compressed domain is possible.

Fig.12 depicts target format definition transcoding hints metadata, which may be associated to the whole A/V content or to a specific A/V segment, in accordance with an embodiment of the invention. As shown in Fig. 12, the relevant Descriptors and Description Schemes may include:
- **bitrate** is of type <int> and describes the bit rate per second of the target A/V data stream.
- **size_of_pictures** is of type <2*int> and describes the size of picture of the target A/V format in x and y directions.
- **number_of_frames_per_second** is of type <int> and describes the number of frames per second of the target content.
- **pel_aspect_ratio** is of type <float> and describes the pel aspect ratio.
- **pel_colour_depth** is of type <int> and describes the color depth.
- **usage_of_progressive_interiaced_format** is of size <1 bit> and describes whether the target format needs to be progressive or interlaced.
- **usage_of_frame_field_pictures** is of size <1 bit> and describes whether frame or field pictures are used.
- **compression_method** is of type <int> and defines the compression method used for the target format and may be selected from a list that includes: MPEG-1, MPEG-2, MPEG-4, DV, H.263, H.261, etc. For every compression method, further parameters may be defined here.
- **GOP_structure** is an optional run-length-encoded data field of the I,P,B-states. With this optional parameter, a fixed GOP structure may be forced. A Fixed GOP structure may be useful, for example, to force I-frames at certain locations to facilitate video editing.

Fig. 13 depicts general transcoding hints metadata (e.g., General Transcoding Hints DS 1004 in Fig. 11), which may be associated to the whole A/V content or to a specific A/V segment, according to an embodiment of the invention. As shown in Fig. 13, relevant Descriptors and Description Schemes may include:
- **use_region_of_interest_DS** has a length of <1 bit> and indicates whether a region of interest description scheme is available as transcoding hints.
- In case the **region_of_interest_DS** is used, then a **shape_D** (which may be for example one of the following: **boundary_box_D, MB_shape_D,** or any other **shape_D**) together with a **motion_trajectory_D** may be used to spatially and temporally describe the region of interest. An **MB_shape_D** may use macroblock (16x16) sized blocks for object shape description. **Motion_trajectory_D** already includes a notion of time so that the start frame and the end frame of the **region_of_interest_DS** may be defined. The **region_of_interest_DS** may have the size of the respective **shape_D** and the respective **motion_trajectory_D.** For transcoding applications, the **region_of_interest_DS** may be used, for example, to spend more bits (or modify the quantizer, respectively) for the blocks within the region of interest than for the background. Another transcoding application to MPEG-4 may be to describe the region of interest by a separate MPEG-4 object and to spent a higher bit rate and a higher frame rate for the region of interest than for other MPEG-4 objects like the background. The extraction of the **region_of_interest_DS** may be performed automatically or manually.
- **use_editing_effects_transcoding_hints_DS** has a length of <1 bit> and indicates if information is available on editing-effects-based transcoding hints.
- **camera_flash** is a list of entries where every entry describes the frame number where a camera flash occurs. Therefore, the length of the descriptor is the number of camera flash events multiplied by <int>. For transcoding applications, the **camera_flash** descriptor is very useful, as most of the video (re-) encoders /transcoders use a motion estimation method based on the luminance difference, c.f. Peter Kuhn: "Algorithms, Complexity Analysis and VLSI Architectures for MPEG-4 motion estimation", Kluwer Academic Publishers, 1999. In case of a luminance-based motion estimation, the mean absolute error between two macroblocks of two subsequent frames (one with flash, one without flash) would be too high for prediction and the frame with the camera flash would have to be encoded as Intra-frame with high bit rate costs. Therefore, indicating the camera flash within a transcoding hints Description Scheme ("DS"), allows for using, for example, a luminance corrected motion estimation method or other means to predict the frame with the camera flash from the anchor frame(s) with moderate bit costs.
- **cross_fading** is a list of entries where every entry describes the start frame and the end frame of a cross fading. Therefore, the length of this descriptor is two times <int> of the number of cross fading events. Indicating the cross fading events in transcoding hints metadata is very useful for controlling the bit rate/quantizer during the cross fading. During cross fading, prediction is generally of limited use causing a bit rate increase for prediction error coding. As during cross fading, the scene is usually blurred, the bit rate increase may be limited by adjusting the quantizer scale, bit rate, or rate control parameters, respectively.
- **black_pictures** is a list of entries where every entry describes the start frame and the end frame of a sequence of black pictures. Between scenes, especially in home video, black pictures may occur. Experimentally, results indicate that a series of black pictures increases the bit rate in motion-compensated DCT coders because the prediction is only of limited use. Therefore, this transcoding hints descriptor may be used to limit the bit rate during black pictures by adjusting the quantizer scale, bit rate, or rate control parameters, respectively.
- **fade_in** is similar to **cross_fading,** and is described as a number of entries determining the start frame and the end frame of a fade in. In comparison to cross fading, the fade in starts from black pictures, and, therefore, a kind of masking effect of the eye may be used to limit the bit rate during fade in by adjusting the quantizer_scale, bit rate, or rate control parameters, respectively.
- **fade_out** is similar to **fade_in,** except that after a scene, a series of black pictures are described.
- **abrupt_change** is described by a list of single frame numbers of type <int> indicating where abrupt scene or shot changes without fading appear. These events are indicated, for example, by the very high and sharp peaks in Fig. 3. These peaks indicate the beginning of a new camera shot or scene. The abrupt_change editing effect is in contrast to the fading effects. When abrupt changes between two video segments appear, then the human visual perception needs a few milliseconds to adapt and recognize the details of the new A/V segment. This slowness effect of the human eye may be used beneficially for video transcoding, for example, for reducing the bit rate or modifying the quantizer scale parameters for the first frames of a video segment after an abrupt change of a scene or shot.
- **use_motion_transcoding_hwts_DS** has a length of <1 bit> and indicates the use of motion-related transcoding hints metadata.
- **number of regions** indicates the number of regions for which the following motion-related transcoding hints metadata are valid.
- **for_every_region** is indicated by a field of < 1 bit> length, whether the region is rectangular or arbitrarily-shaped. In case the region is arbitrarily-shaped, a region descriptor (consisting, e.g., of a shape descriptor and a motion trajectory descriptor) is used. In case of a rectangular region, the size of the rectangular region is used. The motion field within this region is described by a parametric motion model, which is determined by several parameters for every frame or sequence of frames. For transcoding, this motion representation of the real motion of the source video may be used to limit the search area of the computational complex motion estimation of the (re-)encoding part, and also for fast and efficient interlaced/de-interlaced (frame/field) conversion and determining the GOP (Group of Pictures) structure depending on the amount of motion within the video. The motion representation may also be used beneficially for size conversion of the video.

Fig. 14 depicts the segment-based transcoding hints metadata (e.g., segment-based transcoding hints DS 909 and 910 in Fig. 9) which may be used to determine the (re-) encoder/transcoder settings for an A/V segment which depicts constant characteristics, in accordance with an embodiment of the invention. As shown in Fig. 14, relevant Descriptors and Description Schemes may include:
- **start_frame** is of type <int> and describes the frame number of the beginning of the transcoding hints metadata of an A/V segment.
- **nframes** is of type <int> and describes the length of an A/V segment.
- **I_frame_location** gives several possibilities for describing the location of I-frames within an A/V segment.
- **select_one_out_of_the_foflowing** is of size <2 bit> and selects one of the following four 1-frame location description methods.
- **first frame** is of size <1 bit> and is the default 1-frame location. This method describes an A/V segment where only the first frame is an Intra frame of the A/V segment and is used as an anchor for further prediction and all other frames within the A/V segment are P- or B-frames.
- **List of frames** gives a list of frame numbers of Intra-frames within an A/V segment. This method allows for arbitrarily describing the location of Intra-frames within an A/V segment. For k frames within this list, the size of this descriptor is < k*int >.
- **first_frame_and_every_k_frames** is of type <int>, where the first frame within a segment is Intra and k describes the interval of I-frames within the A/V segment.
- **no_I_frame** is of size < 1 bit> and describes the case where no I-frame is used within an A/V segment, which is useful when the encoding of the A/V segment is based on an anchor (Intra-frame) in a previous segment.
- **quantizer_scale** is of type <int> and describes the initial quantizer scale value for an A/V segment.
- **target_bitrate** is of type <int> and describes the target bit rate per second for an A/V segment.
- **target_min_bitrate** is of size <int> and describes the minimum target bit rate per second for an A/V segment (optional).
- **target_max_bitrate** is of size <int> and describes the maximum target bit rate per second for an A/V segment (optional).
- **use_transcoding_states** is of size <1 bit> and describes whether transcoding hint states are used for an A/V segment.
- **transcoding_state_nr** is of type <int> and gives the transcoding hint metadata state for a segment. The transcoding hint metadata state is a pointer to an entry in a table of transcoding hint states. The table of transcoding hint states may have several entries, where new entries may be added or deleted by transcoding hints parameters. The transcoding hints metadata of a single transcoding hint state will be described with reference to Fig. 16.
- **add_new_transcoding_state** is of size <1 bit> and describes whether a new transcoding state with associated information has to be added to the transcoding hints table. In case the add_new_transcoding_state signals "yes", a list of parameters of the new transcoding hints state is given. The size of the parameter list is determined by the number of parameters of one transcoding hints state and the number of transcoding hints state.
- **remove_transcoding_state** is a flag of size <1 bit> indicating whether a transcoding state may be removed or not. In case a transcoding state may be removed, the state number (type: <int>) of the transcoding state to be removed is given.
- **use_encoding_complexity_description** is of size < 1 bit> and signals whether a more detailed encoding complexity description scheme as defined in Fig. 15 has to be used.

Fig. 15 depicts the coding complexity transcoding hints metadata, which may be associated to the whole A/V content or to a specific A/V segment, according to an embodiment of the invention. Encoding complexity metadata may be used for rate control and determines the quantizer and bit rate settings.
- **use_feature_points** is of size <1 bit> and indicates the use of feature point based complexity estimation data.
- **select_feature_point_method** is of size <2 bits> and selects the feature point method.
- **number_of_new_feature_points** per frame describes a list of the number of new feature points per frame as indicated in Fig. 3, and which are of size <nframes * int>. This metric indicates the amount of new content per frame.
- **feature_point_metrics** describes a list of metrics based on the new feature points per frame within one segment. The metrics are represented as an ordered list of <int> values with the following meaning: mean, max, min, variance, standard deviation of the number of the new feature points per frame.
- **use_equation_description** is an <int> pointer to an equation-based description of the encoding complexity per frame.
- **use_motion_description** is of size <1 bit> and indicates the use of a motion-based complexity description.
- **select_motion_method** is of size <4 bits> and selects the motion description method.
- **param_k_motion** is of size <nframes * k * int> and describes the k parameters for every single frame of a global parametric motion model.
- **motion_metrics** describes a list of metrics for the whole segment-based on the size of the motion vectors. The metrics are represented as an ordered list of <int> values with the following meaning: mean, max, min, var, stddev of the macroblock motion vectors.
- **block_motion_field** describes every vector of an m*m block sized motion field and is of size < nframes*int*size_x*size_y / (m*m)>.
- **use _texture_edge_metrics** is a flag that is set when texture or edge metrics are used and it is of size <1 bit>.
- **select_texture_edge_metrics** is of size <4 bits> and it determines which texture metric from the following is used.
- **DCT_block_energy** is the sum of all DCT-coefficients of one block and is defined for every block within a frame. It is of size <size_y*size-X*nframes*int/64>.
- **DCT_block_activity** is defined as the sum of all DCT-coefficients of one block but without the DC coefficient. It is defined for every block within a frame and is of size <size_y*size_x*nframes*int/64>
- **DCT_eoergy_metric** describes a list of metrics for the whole segment-based on the individual DCT energies of each block. The metrics are represented as an ordered list of <int> values with the following meaning: mean, max, min, variance, standard deviation of all the individual DCT energy metrics. The size of the descriptor is <6*int>. An alternative implementation of this descriptor is to describe the DCT energy metric for every single frame of the video segment.
- **DCT_activity_metric** describes a list of metrics for the whole segment-based on the individual DCT activities of each block. The metrics are represented as an ordered list of <int> values with the following meaning: mean, max, min, variance, standard deviation of all the individual DCT activity metrics. The size of the descriptor is <6*int>. An alternative implementation of this descriptor is to describe the DCT activity metric for every single frame of the video segment.

Fig. 16 depicts the transcoding hints state metadata, which may be associated to the whole audio-visual content or to a specific A/V segment according to an embodiment of the invention. Relevant Descriptors and Description Schemes may include:
- M is of type <int> and describes the I-frame/P-frame distance.
- **bitrate_fractioo_for_I** is of type <float> and describes the fraction of the bit rate defined for an A/V segment that is available for I frames.
- **bitrate_fraction_for** P is of type <float> and describes the fraction of the bit rate defined for an A/V segment that may be used for P frames. The bit rate fraction for B-frames is the rest of the percentage to 100 %.
- **quantizer_scale_ratio_I_P** is of type <float> and denotes the relation of the quantizer scale (as defined for this segment) between I- and P-frames.
- **quantizer_scale_ratio_I_B** is of type <float> and denotes the relation of the quantizer scale (as defined for this segment) between I- and B-frames. It is noted that either the bit rate descriptors (bitrate_fraction_for_I<bitrate_fraction_for_P), the quantizer_scale_ratio descriptors (quantizer_scale_ratio_I_P, quantizer_scale_ratio_I_B) or the following rate-control parameters may be mandatory.
- **X_I, X_P, X_B** are frame_vbv_complexities and are each of type <int> and are defined in case of frame based compression target format (cf., Fig. 12). These and the following Virtual Buffer Verifier ("VBV") complexity adjustments may be optional and may be used to modify the rate control scheme according to the source content characteristics and the target format definition.
- **X_I top, X_P top, X B top** are field_vbv_complexities for the top field and are each of type <int> and are defined in case of field based compression target format (cf. Fig. 12).
- **X_I_bot, X_P_bot, X_B_bot** are field_vbv_complexities for the bottom field and are each of type <int> and are defined in case of field based compression target format (cf. Fig. 12).

It will thus be seen that the objects set forth above, among those made apparent from the preceding description, are efficiently attained and, because certain changes may be made in carrying out the above method and in the construction(s) set forth without departing from the spirit and scope of the invention, it is intended that all matter contained in the above description and shown in the accompanying drawings shall be interpreted as illustrative and not in a limiting sense.

It is also to be understood that the following claims are intended to cover all of the generic and specific features of the invention herein described and all statements of the scope of the invention which, as a matter of language, might be said to fall therein.

## Claims

1. A method of processing image signals representing content to convert the image signals from a source format to a target format suitable for a target device to use the image signals, the method comprising:
a) storing in a first memory (203) a description of the target format,
b) storing in a second memory (201, 202) the image signals and a description of the source format of the image signals,
c) calculating (207) transcoding hints metadata specifying parameters for transcoding form the source format to the target format from the descriptions of the source and target formats stored in the first and second memories, the transcoding hints metadata being grouped into a plurality of transcoding hints states,
d) calculating a number of new feature points per frame of the content, the new feature points being locations in a frame having an abrupt change in brightness, colour or texture with respect to the preceding frame, determining whether an accumulation of the number of new feature points for a plurality of successive frames exceeds a threshold value, and selecting based on the determination one of the plurality of transcoding hints states,
e) transcoding (205) the image signals to the target format suitable for the target device based on the transcoding hints metadata of the selected hints state.

2. A method according to claim 1, wherein the image signal is a compressed image signal.

3. A method according to claim 1, wherein the step of calculating the transcoding hints metadata comprises the steps of:
receiving a first bitstream of compressed image data having a first GOP structure; obtaining first motion information from the first bitstream; obtaining texture/edge information of a first segmentation;
obtaining feature points and associated motion information from the first bitstream; and obtaining region of interest information from the first bitstream.

4. A method according to claim 3, wherein the step of calculating the transcoding hints metadata further comprises the step of storing the first motion information as transcoding parameters.

5. A method according to claim 3, wherein the step of calculating the transcoding hints metadata further comprises the step of representing motion-related transcoding parameters as parameters of a parametric motion model.

6. A method according to claim 5, wherein the step of calculating the transcoding hints metadata further comprises the step of employing the parametric motion model to describe a global motion within subsequent rectangular video frames.

7. A method according to claim 5, wherein the step of calculating the transcoding hints metadata further comprises the step of employing the parametric motion model to describe a motion within a defined region of arbitrary shape.

8. A method according to claim 7, wherein the parametric motion model is employed to describe the motion within the defined region of arbitrary shape as defined within MPEG-4.

9. A method according to any preceding claims, wherein the image signals represent audio visual content.

10. Signal processing apparatus for converting image signals representing content from a source format to a target format suitable for a target device to use the image signals, the apparatus comprising
a first memory (203) arranged to store a description of the target format,
a second memory (201, 202) arranged to store the image signals and a description of the source format of the image signals,
a generator (207) arranged
to calculate transcoding hints metadata specifying parameters for transcoding from the source format to the target format from the descriptions of the source and target formats stored in the first and second memories, the transcoding hints metadata being grouped into a plurality of transcoding hints state
to calculate a number of new feature points per frame of the content, the new feature points being locations in a frame having an abrupt change in brightness, colour or texture with respect to the preceding frame,
to determine whether an accumulation of the number of new feature points for a plurality of successive frames exceeds a threshold value, to select based on the determination one of the plurality of transcoding hints states, and
a transcoder (205) arranged to transcode the image signals to the target format suitable for the target device based on the transcoding hints metadata of the selected hints state.

11. Apparatus according to claim 10, wherein the image signal is a compressed image signal and the generator is arranged to:
receive a first bitstream of compressed image data having a first GOP structure as the compressed image signal; obtain first motion information from the first bitstream;
obtain texture/edge information of a first segmentation;
obtain feature points and associated motion information from the first bitstream; and
obtain region of interest information from the first bitstream.

12. Apparatus according to claim 11, wherein the generator is arranged to store the first motion information as transcoding parameters.

13. Apparatus according to claim 11, wherein the generator is arranged to represent motion-related transcoding parameters as parameters of a parametric motion model.

14. Apparatus according to claim 13, wherein the generator is arranged to employ the parametric motion model to describe a global motion within subsequent rectangular video frames.

15. Apparatus according to claim 13, wherein the generator is arranged to employ the parametric motion model to describe a motion within a defined region of arbitrary shape.

16. Apparatus according to claim 19, wherein the generator is arranged to employ the parametric motion model to describe the motion within the defined region of arbitrary shape as defined within MPEG-4.

17. Apparatus according to any one of claims 11 to 16 arranged to process audio visual content signals.

## Patentansprüche

1. Verfahren zum Verarbeiten von Bildsignalen, die einen Inhalt darstellen, um die Bildsignale von einem Quellformat in ein Zielformat umzusetzen, welches für eine Zielvorrichtung zur Nutzung der Bildsignale geeignet ist, umfassend:
a) Speichern einer Beschreibung des Zielformats in einem ersten Speicher (203),
b) Speichern der Bildsignale und einer Beschreibung des Quellformats der Bildsignale in einem zweiten Speicher (201, 202),
c) Berechnen (207) von Metadaten von Codeumsetzungshinweisen, wobei die Metadaten Parameter zur Codeumsetzung vom Quellformat in das Zielformat aus den Beschreibungen der in den ersten und zweiten Speichern gespeicherten Quell- bzw. Zielformate spezifizieren,
wobei die Metadaten der Codeumsetzungshinweise in eine Mehrzahl von Zuständen von Codeumsetzungshinweisen gruppiert werden,
d) Berechnen einer Anzahl von neuen Merkmalspunkten pro Bild (Rahmen) des Inhalts,
wobei die neuen Merkmalspunkte Stellen in einem Bild sind, die eine abrupte Änderung in der Helligkeit, Farbe oder Textur in Bezug auf das vorhergehende Bild aufweisen,
Bestimmen, ob eine Akkumulation der Anzahl von neuen Merkmalspunkten für eine Mehrzahl von aufeinander folgenden Bildern einen Schwellwert überschreitet,
und Auswählen eines der Mehrzahl von Zuständen von Codeumsetzungshinweisen auf der Grundlage des Bestimmens,
e) Codeumsetzung (205) der Bildsignale in das für die Zielvorrichtung geeignete Zielformat auf der Grundlage der Metadaten der Codeumsetzungshinweise des ausgewählten Zustands der Hinweise.

2. Verfahren nach Anspruch 1, wobei das Bildsignal ein komprimiertes Bildsignal ist.

3. Verfahren nach Anspruch 1, wobei der Schritt des Berechnens der Metadaten der Codeumsetzungshinweise die Schritte umfasst:
Empfangen eines ersten Bitstroms von komprimierten Bilddaten mit einer ersten GOP-(Gruppe-von-Bildem)-Struktur,
Erzielen einer ersten Bewegungsinformation aus dem ersten Bitstrom,
Erzielen einer Textur-/Kanten- bzw. Randinformation einer ersten Segmentierung,
Erzielen von Merkmalspunkten und zugehörigen Bewegungsinformationen aus dem ersten Bitstrom
und Erzielen eines Bereiches interessierender Information aus dem ersten Bitstrom.

4. Verfahren nach Anspruch 3, wobei der Schritt des Berechnens der Metadaten der Codeumsetzungshinweise ferner den Schritt des Speicherns der ersten Bewegungsinformation als Codeumsetzungsparameter umfasst.

5. Verfahren nach Anspruch 3, wobei der Schritt des Berechnens der Metadaten der Codeumsetzungshinweise ferner den Schritt des Darstellens von bewegungsbezogenen Codeutnsetznngsparametern als Parameter eines parametrischen Bewegungsrnadeils umfaßt.

6. Verfahren nach Anspruch 5, wobei der Schritt des Berechnens der Metadaten der Codeumsetzungshinweise ferner den Schritt des Anwendens des parametrischen Bewegungsmodells zum Beschreiben einer umfassenden Bewegung innerhalb nachfolgender rechteckiger Videobilder umfasst.

7. Verfahren nach Anspruch 5, wobei der Schritt des Berechnens der Metadaten der Codierungsumsetzungshinweise ferner den Schritt des Anwendens des parametrischen Bewegungsmodells zum Beschreiben einer Bewegung innerhalb eines definierten Bereiches von beliebiger Form umfasst.

8. Verfahren nach Anspruch 7, wobei das parametrische Bewegungsmodell zum Beschreiben der Bewegung innerhalb des definierten Bereiches beliebiger Form angewandt wird, wie dies in MPEG-4 festgelegt ist.

9. Verfahren nach einem der vorhergehenden Ansprüche, wobei die Bildsignale einen audiovisuellen Inhalt darstellen.

10. Signalverarbeitungsvorrichtung zum Umsetzen von Bildsignalen, die einen Inhalt darstellen, von einem Quellformat in ein Zielformat, welches für eine Zielvorrichtung zur Nutzung der Bildsignale geeignet ist, umfassend:
einen ersten Speicher (203), der angeordnet bzw. ausgelegt ist, um eine Beschreibung des Zielformats zu speichern,
einen zweiten Speicher (201, 202), der angeordnet bzw. ausgelegt ist, um die Bildsignale und eine Beschreibung des Quellformats der Bildsignale zu speichern,
einen Generator (207), der angeordnet bzw. ausgelegt ist,
um Metadaten von Codeumsetzungshinweisen zu berechnen,
wobei die Metadaten Parameter zur Codeumsetzung vom Quellformat in das Zielformat aus den Beschreibungen der in den ersten und zweiten Speichern gespeicherten Quell- bzw. Zielformate spezifizieren,
wobei die Metadaten der Codeumsetzungshinweise in eine Mehrzahl von Zuständen von Codeumsetzungshinweisen gruppiert sind,
um eine Anzahl von neuen Merkmalspunkten pro Bild (Rahmen) des Inhalts zu berechnen,
wobei die neuen Merkmalspunkte Stellen in einem Bild sind, welche eine abrupte Änderung in der Helligkeit, Farbe oder Textur in Bezug auf das vorhergehende Bild aufweise,
um zu bestimmen, ob eine Akkumulation der Anzahl von neuen Merkmalspunkten für eine Mehrzahl von aufeinander folgenden Bildern einen Schwellwert überschreitet,
um auf der Grundlage des Bestimmens einen der Mehrzahl von Zuständen der Codeumsetzungshinweise auszuwählen,
und einen Codeumsetzer (205), der angeordnet bzw. ausgelegt ist, um auf der Grundlage der Metadaten der Codeumsetzungshinweise des ausgewählten Zustands der Hinweise die Bildsignale im Code in das für die Zielvorrichtung geeignete Zielformat umzusetzen.

11. Vorrichtung nach Anspruch 10, wobei das Bildsignal ein komprimiertes Bildsignal ist und wobei der Generator angeordnet bzw. ausgelegt ist,
um einen ersten Bitstrom von komprimierten Bilddaten, die eine erste GOP-(Gruppe-von-Bildern)-Struktur aufweisen, als komprimiertes Bildsignal zu empfangen,
um eine erste Bewegungsinformation aus dem ersten Bitstrom zu erzielen,
um eine Textur-/Kanten- bzw. Randinformation einer ersten Segmentierung zu erzielen,
um Merkmalspunkte und zugehörige Bewegungsinformationen aus dem ersten Bitstrom zu erzielen
und um einen Bereich interessierender Information aus dem ersten Bitstrom zu erzielen.

12. Vorrichtung nach Anspruch 11, wobei der Generator angeordnet bzw. ausgelegt ist, um die erste Bewegungsinformation als Codeumsetzungsparameter zu speichern.

13. Vorrichtung nach Anspruch 11, wobei der Generator angeordnet bzw. ausgelegt ist, um bewegungsbezogene Codeumsetzungsparameter als Parameter eines parametrischen Bewegungsmodells darzustellen.

14. Vorrichtung nach Anspruch 13, wobei der Generator angeordnet bzw. ausgelegt ist, um das parametrische Bewegungsmodell zum Beschreiben einer umfassenden Bewegung innerhalb von nachfolgenden rechteckigen Videobildern anzuwenden.

15. Vorrichtung nach Anspruch 13, wobei der Generator angeordnet bzw. ausgelegt ist, um das parametrische Bewegungsmodell zum Beschreiben einer Bewegung innerhalb eines definierten Bereiches beliebiger Form anzuwenden.

16. Vorrichtung nach Anspruch 15, wobei der Generator angeordnet bzw. ausgelegt ist, um das parametrische Bewegungsmodell zum Beschreiben einer Bewegung innerhalb des definierten Bereiches beliebiger Form anzuwenden, wie dies in MPEG-4 festgelegt ist.

17. Vorrichtung nach einem der Ansprüche 11 bis 16, die angeordnet bzw. ausgelegt ist zum Verarbeiten von audiovisuellen Inhaltssignalen.

## Revendications

1. Procédé de traitement de signaux d'image représentant un contenu pour convertir les signaux d'image depuis un format source dans un format cible approprié pour un dispositif cible afin d'utiliser les signaux d'image, le procédé comportant :
a) la mémorisation dans une première mémoire (203) d'une description du format cible,
b) la mémorisation dans une seconde mémoire (201, 202) des signaux d'image et une description du format source des signaux d'image,
c) le calcul (207) de métadonnées hints de transcodage spécifiant les paramètres pour transcoder du format source au format cible à partir des descriptions des formats source et cible mémorisés dans les première et seconde mémoires, les métadonnées hints de transcodage étant groupées en une pluralité d'états hints de transcodage,
d) le calcul d'un certain nombre de nouveaux points caractéristiques par trame du contenu, les nouveaux points caractéristiques étant des emplacements dans une trame présentant un changement abrupt de clarté, de couleur ou de texture par rapport à la trame précédente, la détermination si une accumulation du nombre de nouveaux points caractéristiques pour une pluralité de trames successives dépasse une valeur de seuil, et la sélection en fonction de la détermination d'un de la pluralité d'états hints de transcodage,
e) le transcodage (205) des signaux d'image au format cible approprié pour un dispositif cible en fonction des métadonnées hints de transcodage des états hints sélectionnés.

2. Procédé selon la revendication 1, dans lequel le signal d'image est un signal d'images compressé.

3. Procédé selon la revendication 1, dans lequel l'étape de calcul des métadonnées hints de transcodage comporte les étapes consistant à :
recevoir un premier flux de bits de données d'images compressées possédant une première structure GOP ; obtenir une première information de mouvement à partir du premier plus de bits ; obtenir une information de texture/bord d'une première segmentation ;
obtenir des points caractéristiques et une information de déplacement associé à partir du premier flux de bits ; et obtenir une région d'information intéressante à partir du premier flux de bits.

4. Procédé selon la revendication 3, dans lequel l'étape de calcul des métadonnées hints de transcodage comporte en outre l'étape consistant à mémoriser la première information de déplacement en tant que paramètre de transcodage.

5. Procédé selon la revendication 3, dans lequel l'étape consistant à calculer des métadonnées hints de transcodage comporte en outre l'étape consistant à représenter les paramètres de transcodage associés au déplacement en tant que paramètres d'un modèle de déplacement paramétrique.

6. Procédé selon la revendication 5, dans lequel l'étape consistant à calculer des métadonnées hints de transcodage comporte en outre l'étape consistant à utiliser le modèle de déplacement paramétrique pour décrire un déplacement global à l'intérieur de trames vidéo rectangulaires successives.

7. Procédé selon la revendication 5, dans lequel l'étape consistant à calculer des métadonnées hints de transcodage comporte en outre l'étape consistant à utiliser le modèle de déplacement paramétrique pour décrire un déplacement à l'intérieur d'une région définie de forme arbitraire.

8. Procédé selon la revendication 7, dans lequel le modèle de déplacement paramétrique est utilisé pour décrire le déplacement à l'intérieur de la région définie de forme arbitraire telle que définie dans MPEG-4.

9. Procédé selon l'une quelconque des revendications précédentes, dans lequel les signaux d'image représentent un contenu audiovisuel.

10. Appareil de traitement de signaux pour convertir des signaux d'image représentant un contenu d'un format source en un format cible approprié pour un dispositif cible afin d'utiliser les signaux d'image, l'appareil comportant
une première mémoire (203) disposée pour mémoriser une description du format cible,
une seconde mémoire (201, 202) agencée pour mémoriser les signaux d'image et une description du format source des signaux d'image,
un générateur (207) agencé
pour calculer des métadonnées hints de transcodage spécifiant les paramètres pour transcoder du format source vers le format cible à partir des descriptions des formats source et cible mémorisés dans les première et seconde mémoires, les métadonnées hints de transcodage étant groupées en une pluralité d'états hints de transcodage,
pour calculer un certain nombre de nouveaux points caractéristiques par trame du contenu, les nouveaux points caractéristiques étant des emplacements dans une trame présentant un changement abrupt de clarté, de couleur ou de texture par rapport à la trame précédente,
pour déterminer si une accumulation du nombre de nouveaux points caractéristiques pour une pluralité de trames successives dépasse une valeur de seuil,
pour sélectionner en fonction de la détermination l'un de la pluralité des états hints de transcodage, et
un transcodeur (205) agencé pour transcoder les signaux d'image dans le format cible approprié pour le dispositif cible en fonction des métadonnées hints de transcodage de l'état hints sélectionné.

11. Appareil selon la revendication 10, dans lequel le signal d'image est un signal d'image compressé et le générateur est agencé pour :
recevoir un premier flux de bits de données d'image compressées possédant une première structure GOP en tant que signal d'image compressé ; obtenir une première information de déplacement à partir du premier flux de bits;
obtenir une information de texture/bord d'une première segmentation ;
obtenir des points caractéristiques et une information de déplacement associée à partir du premier flux de bits ; et
obtenir une région d'information intéressante à partir du premier flux de bits.

12. Appareil selon la revendication 11, dans lequel le générateur est agencé pour mémoriser la première information de déplacement en tant que paramètres de transcodage.

13. Appareil selon la revendication 11, dans lequel le générateur est agencé pour représenter des paramètres de transcodage associés au déplacement en tant que paramètres d'un modèle de déplacement paramétrique.

14. Appareil selon la revendication 13, dans lequel le générateur est agencé pour utiliser le modèle de déplacement paramétrique pour d'écrire un déplacement global à l'intérieur de trames vidéo rectangulaires successives.

15. Appareil selon la revendication 13, dans lequel le générateur est agencé pour utiliser le modèle de déplacement paramétrique pour décrire un déplacement à l'intérieur d'une région définie de forme arbitraire.

16. Appareil selon la revendication 15, dans lequel le générateur est agencé pour utiliser le modèle de déplacement paramétrique pour décrire le déplacement à l'intérieur de la région définie de forme arbitraire telle que définie dans MPEG-4.

17. Appareil selon l'une quelconque des revendications 11 à 16, agencé pour traiter des signaux de contenu audiovisuel.
